# EUROPÄISCHE PATENTSCHRIFT

(11) **EP 1 116 410 B1**
(45) Veröffentlichungstag und Bekanntmachung des Hinweises auf die Patenterteilung: **28.11.2007**
(21) Anmeldenummer: 99953651.9
(22) Anmeldetag: 01.09.1999
(51) Int. Cl.: H04Q 11/04

(54) **VERFAHREN ZUM ERMITTELN EINER NETZZUGANGSADRESSE**
METHOD FOR DETERMINING A NETWORK ACCESS ADDRESS
PROCEDE DE DETERMINATION D'UNE ADRESSE D'ACCES A UN RESEAU

(30) Priorität: 23.09.1998 DE 19843626
(43) Veröffentlichungstag der Anmeldung: 18.07.2001
(73) Patentinhaber: Siemens Enterprise Communications GmbH & Co. KG, 81379 München (DE)
(72) Erfinder: FRAAS, Wolfgang, D-82515 Wolfratshausen (DE); HÜNLICH, Klaus, D-85467 Neuching (DE)
(74) Vertreter: Maier, Daniel Oliver
(86) Internationale Anmeldenummer: PCT/DE1999/002736
(87) Internationale Veröffentlichungsnummer: WO 2000/018178

(56) Entgegenhaltungen:
- DE-A- 4 326 795
- DE-A- 19 604 244
- US-A- 5 119 369
- US-A- 5 568 475
- BIAGIONI E ET AL: "DESIGNING A PRACTICAL ATM LAN" IEEE NETWORK: THE MAGAZINE OF COMPUTER COMMUNICATIONS,US,IEEE INC. NEW YORK, 1. März 1993 (1993-03-01), Seiten 32-39, XP000577242 ISSN: 0890-8044

## Beschreibung

In der Regel wird in Kommunikations-Festnetzen die einem Teilnehmer zugeordnete Teilnehmerrufnummer - z.B. die Telefonnummer oder die Faxnummer - durch die Zugehörigkeit des dem Teilnehmer zugeordneten Kommunikationsendgerätes zu einer Vermittlungsanlage festgelegt. Die Teilnehmerrufnummer (z.B. 636-82963) setzt sich dabei aus einem die Vermittlungsanlage kennzeichnenden Teil (z.B. 636) und einem den Teilnehmer kennzeichnenden Teil (z.B. 82963) zusammen, wobei letzter durch diejenige Teilnehmerschnittstelle der Vermittlungsanlage bestimmt wird, über welche das Kommunikationsendgerät an die Vermittlungsanlage angeschlossen ist.

Bei einem Umzug des Teilnehmers ändert sich im Gegensatz zu Mobilfunknetzen üblicherweise die dem Teilnehmer zugeordnete Teilnehmerrufnummer, da das Kommunikationsendgerät entweder einer anderen Vermittlungsanlage zugeordnet ist, oder das Kommunikationsendgerät über eine andere Teilnehmerschnittstelle mit derselben Vermittlungsanlage verbunden ist.

Aus der deutschen Offenlegungsschrift DE 196 04 244 A1 ist ein Kommunikationssystem bekannt, bei dem die einer Vermittlungsanlage zugeordnete Kommunikationsendgeräte über ein ATM-basiertes Kommunikationsnetz mit der Vermittlungsanlage verbunden sind. Hierbei werden die Teilnehmerschnittstellen durch eine Mehrzahl von an das ATM-basierte Netz angeschlossenen ATM-Ubergabeeinheiten - in der Literatur häufig mit ATM-Hub bezeichnet - zur Verfügung gestellt. Die Vermittlungsanlage und die ATM-Übergabeeinheit weisen dabei jeweils eine ATM-Anschlußeinheit auf, über die einerseits eine Verbindung mit dem ATM-basierten Netz realisiert wird und andererseits eine bidirektionale Umwandlung zwischen dem vermittlungsanlagen- bzw. übergabeeinheiteninternen Datenformat und dem ATM-basierten Datenformat erfolgt.

Bei dem als Asynchronen Transfer Modus (ATM) bekannten zellbasierten Datenübertragungsverfahren werden für den Datentransport Datenpakete fester Länge, sogenannte ATM-Zellen benutzt. Eine ATM-Zelle setzt sich aus einem, für den Transport einer ATM-Zelle relevante Vermittlungsdaten enthaltenden, fünf Bytes langem Zellkopf, dem sogenannten 'Header' und einem 48 Bytes langem Nutzdatenfeld, der sogenannten 'Payload' zusammen.

Eine Datenübertragung über ein ATM-basiertes Netz erfolgt im allgemeinen im Rahmen von virtuellen Pfaden bzw. Kanälen. Hierzu werden bei einem Verbindungsaufbau vor Beginn der Nutzdatenübertragung durch Austausch von Signalisierungsinformationen Verbindungstabellen mit aus einer Virtuellen-Kanal-Identifizierung und aus einer Virtuellen-Pfad-Identifizierung bestehenden Vermittlungsinformation in den jeweiligen ATM-Netzknoten eingerichtet. In den Verbindungstabellen ist der Virtuellen-Kanal-Identifizierung ein sogenannter VCI-Wert und der Virtuellen-Pfad-Identifizierung ein sogenannter VPI-Wert zugewiesen. Durch die in den Verbindungstabellen eingetragenen Vermittlungsinformation ist festgelegt, wie die virtuellen Pfade bzw. in den virtuellen Pfaden enthaltene virtuelle Kanäle der an den ATM-Netzknoten ein- und ausgehenden Verbindungen durch die Signalisierung einander zugeordnet sind, d.h. welcher Eingang mit welchem Ausgang vermittlungstechnisch verknüpft ist. Über diese virtuellen Verbindungen übermittelte ATM-Zellen weisen im Zellkopf im wesentlichen aus einem VPI- und einen VCI-Wert bestehende Vermittlungsdaten auf. Am Eingang eines ATM-Netzknotens werden die ATM-Zellkopf-Daten bearbeitet, d.h. die darin angeordneten Vermittlungsdaten erfaßt und bewertet. Anschließend werden die ATM-Zellen durch den ATM-Netzknoten anhand der in der Verbindungstabelle gespeicherten Vermittlungsinformation an einen, ein bestimmtes Ziel repräsentierenden Ausgang vermittelt.

Für die Adressierung einer Teilnehmerschnittstelle der ATM-Ubergabeeinheit bzw. eines an der Teilnehmerschnittstelle angeschlossenen Kommunikationsendgerätes über das ATM-basierte Netz durch die Vermittlungsanlage, wird zwischen der ATM-Übergabeeinheit und der Vermittlungsanlage für jedes Kommunikationsendgerät ein ATM-Kanal eingerichtet, d.h. jeder Teilnehmerschnittstelle einer ATM-Übergabeeinheit bzw. jedem an einer Teilnehmerschnittstelle angeschlossene Kommunikationsendgerätes wird für eine Datenübermittlung von der Vermittlungsanlage eine eindeutige VPI/VCI-Adresse zugeordnet. Bisher wird die Zuordnung und die Verwaltung der VPI/VCI-Adresse zu den jeweiligen Teilnehmerschnittstellen in der Vermittlungsanlage manuell vorgenommen.

Wird die Zuordnung eines dem Kommunikationssystem zugeordneten Kommunikationsendgerätes zu einer Teilnehmerschnittstelle einer ATM-Übergabeeinheit z.B. infolge eines Umzuges geändert, soll aber die Rufnummer des Kommunikationsendgerätes erhalten bleiben, so ist eine manuelle Änderung der, dem Kommunikationsendgerät zugeordneten VPI/VCI-Adresse in der Vermittlungsanlage notwendig. Dies ist jedoch insbesondere in großen Kommunikationssystemen sehr aufwendig.

Der vorliegenden Erfindung liegt die Aufgabe zugrunde, ein Verfahren anzugeben, durch welches eine automatische Zuordnung einer Netzzugangsadresse zu einem Kommunikationsendgerät auf einfache Weise erfolgen kann.

Die Lösung der Aufgabe erfolgt erfindungsgemäß mit den Merkmalen des Patentanspruchs 1.

Ein wesentlicher Vorteil des erfindungsgemäßen Verfahrens besteht darin, daß durch eine automatische Zuordnung einer Netzzugangsadresse zu einem über das Kommunikationsnetz mit der Vermittlungsanlage verbundenen Kommunikationsendgerät die Fehleranfälligkeit des Systems im Gegensatz zur bisher erfolgenden manuellen Zuordnung verringert wird.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch eine Übermittlung einer persönlichen Identifikationsnummer PIN (Personal Identification Number) und alternativ oder additiv der Übermittlung eines Paßwortes durch einen dem Kommunikationsendgerät zugeordneten Kommunikationsteilnehmer - in der Literatur häufig als Teilnehmer-Authentifizierung bezeichnet - für eine Registrierung des Endgerätes an der Vermittlungsanlage ein Zugriff unberechtigter Personen auf die Vermittlungsanlage unterbunden wird.

Ein Ausführungsbeispiel der Erfindung wird im folgenden anhand der Zeichnung näher erläutert.

Dabei zeigen:
- Fig. 1:: ein Strukturbild zur schematischen Darstellung der am erfindungsgemäßen Verfahren beteiligten wesentlichen Funktionseinheiten vor einem Umzug eines Kommunikationsteilnehmers;
- Fig. 2:: ein Strukturbild zur schematischen Darstellung der am erfindungsgemäßen Verfahren beteiligten wesentlichen Funktionseinheiten nach dem Umzug des Kommunikationsteilnehmers.

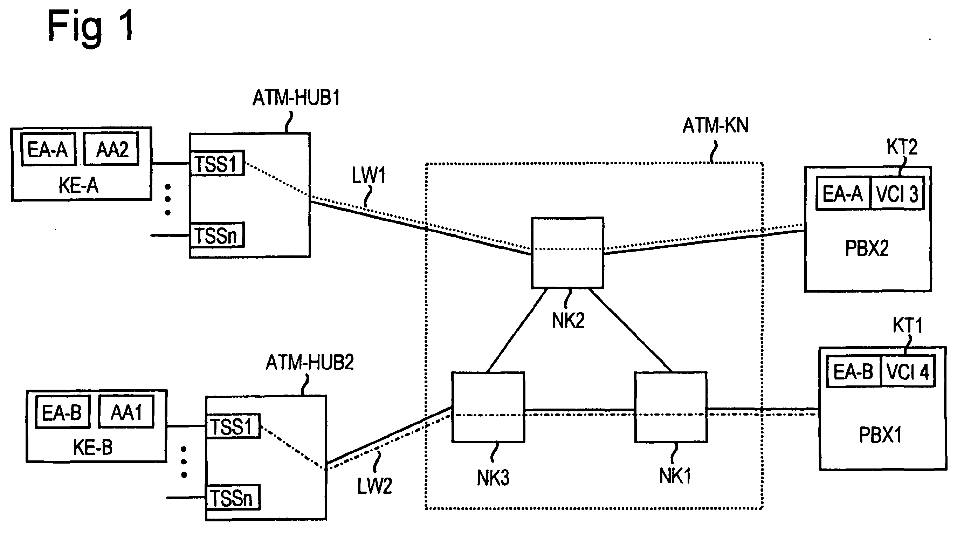

Fig. 1 zeigt eine schematische Darstellung zweier Vermittlungsanlagen PBX1, PBX2 (Privat Branche Exchange) die über ein ATM-basiertes Kommunikationsnetz ATM-KN mit zwei ATM-Übergabeeinheiten ATM-HUB1, ATM-HUB2 verbunden sind. Das ATM-basierte Kommunikationsnetz ATM-KN besteht beispielhaft aus drei Netzknoten NK1, NK2, NK3, wobei die erste Vermittlungsanlage PBX1 über den ersten Netzknoten NK1, die zweite Vermittlungsanlage PBX2 und die erste ATM-Übergabeeinheit ATM-HUB1 über den zweiten Netzknoten NK2 und die zweite ATM-Übergabeeinheit ATM-HUB2 über den dritten Netzknoten NK3 an das ATM-basierte Kommunikationsnetz ATM-KN angeschlossen sind.

Die ATM-Übergabeeinheiten ATM-HUB1, ATM-HUB2 weisen jeweils n Teilnehmerschnittstellen TSS1,...,TSSn zum Anschluß von Kommunikationsendgeräten an das ATM-basierte Kommunikationsnetz ATM-KN auf. Beispielhaft sind über die Teilnehmerschnittstelle TSS1 der ersten ATM-Übergabeeinheit ATM-HUB1 ein, einem ersten Kommunikationsteilnehmer zugeordnetes erstes Kommunikationsendgerät KE-A und über die Teilnehmerschnittstelle TSS1 der zweiten ATM-Übergabeeinheit ATM-HUB2 ein, einem zweiten Kommunikationsteilnehmer zugeordnetes zweites Kommunikationsendgerät KE-B angeschlossen.

Über die ATM-Übergabeeinheiten ATM-HUB1, ATM-HUB2 werden üblicherweise mittels S₀-Schnittstellen ISDN-Kommunikationsendgeräte (Integrated Services Digital Network) oder mittels daraus abgeleiteten Schnittstellen, wie beispielsweise Uₚ₀-Schnittstellen digitale Kommunikationsendgeräte mit dem ATM-basierten Kommunikationsnetz ATM-KN verbunden. Allgemein umfassen eine U_{P0}- bzw. eine S₀-Schnittstelle zum einen 2 Nutzdatenkanäle, welche als ISDN-orientierte B-Kanäle mit einer Übertragungsrate von jeweils 64 kBit/s ausgestaltet sind und zum anderen einen Signalisierungskanal, welcher als ISDNorientierter D-Kanal mit einer Übertragungsrate von 16 kBit/s ausgestaltet ist. Des weiteren besteht generell die Möglichkeit über a/b-Schnittstellen analoge Kommunikationsendgeräte mit dem ATM-basierten Kommunikationsnetz ATM-KN zu verbinden.

Eine Übertragung dieser zeitschlitz-orientierten Daten - bestehend aus zwei B-Kanälen und einem D-Kanal - zwischen den an die ATM-Übergabeeinheiten ATM-HUB1, ATM-HUB2 angeschlossenen Kommunikationsendgeräten KE-A, KE-B und der Vermittlungsanlage erfolgt üblicherweise auf Basis des, z.B. aus der Produktschrift "ICs for Communications - IOM®-2 Interface Reference Guide" der Firma Siemens, München, 3/91, Bestell-Nr. B115-H6397-X-X-7600, insbesondere der Seiten 6 bis 12 bekannten Datenformats IOM-2. Zur Datenübertragung über das ATM-basierte Kommunikationsnetz ATM-KN weisen sowohl die Vermittlungsanlagen PBX1, PBX2 als auch die ATM-Übergabeeinheiten ATM-HUB1, ATM-HUB2 jeweils eine - nicht dargestellte - ATM-Anschlußeinheit auf, über die einerseits eine Verbindung mit dem ATM-basierten Kommunikationsnetz ATM-KN realisiert wird und andererseits eine bidirektionale Umwandlung zwischen dem üblicherweise für eine Datenübermittlung zwischen den Vermittlungsanlagen PBX1, PBX2 und den ATM-Übergabeeinheiten ATM-HUB1, ATM-HUB2 vorgesehenen IOM-2-Datenformats und dem ATM-Datenformat erfolgt.

Eine bidirektionale Umwandlung zwischen dem IOM-2-Datenformat und dem ATM-Datenformat kann dabei entweder gemäß dem aus der deutschen Offenlegungsschrift DE 196 04 244 A1 bekannten Verfahren oder gemäß dem in der deutschen Patentanmeldung mit dem amtlichen Kennzeichen 198 39 129.3 vorgeschlagenen Verfahren erfolgen.

Im vorliegenden Ausführungsbeispiel ist das erste Kommunikationsendgerät KE-A der zweiten Vermittlungsanlage PBX2 und das zweite Kommunikationsendgerät KE-B der ersten Vermittlungsanlage PBX1 zugeordnet. In diesem Zusammenhang wird in der Literatur häufig davon gesprochen, daß das erste Kommunikationsendgerät KE-A an der zweiten Vermittlungsanlage PBX2 und das zweite Kommunikationsendgerät KE-B an der ersten Vermittlungsanlage PBX1 registriert sind. Hierzu sind in einem Speicher des ersten Kommunikationsendgerätes KE-A die Adresse der zweiten Vermittlungsanlage PBX2 - im weiteren mit Anlagenadresse AA2 bezeichnet - und eine dem ersten Kommunikationsendgerät KE-A eindeutig im ATM-basierten Kommunikationsnetz ATM-KN zugeordnete Adresse - im weiteren mit Endgeräteadresse EA-A bezeichnet - gespeichert. Des weiteren sind in einem Speicher des zweiten Kommunikationsendgerätes KE-B die Adresse der ersten Vermittlungsanlage PBX1 - im weiteren mit Anlagenadresse AA1 bezeichnet - und eine dem zweiten Kommunikationsendgerät KE-B eindeutig im ATM-basierten Kommunikationsnetz ATM-KN zugeordnete Adresse - im weiteren mit Endgeräteadresse EA-B bezeichnet - gespeichert.

Für eine Datenübermittlung von der zweiten Vermittlungsanlage PBX2 zum ersten Kommunikationsendgerät KE-A über den ersten Leitweg LW1 ist in einer, in der zweiten Vermittlungsanlage PBX2 hinterlegten Konfigurierungstabelle KT2 die Endgeräteadresse EA-A des ersten Kommunikationsendgerätes KE-A und eine dieser Endgeräteadresse EA-A zugeordnete VPI/VCI-Adresse - im weiteren mit Netzzugangsadresse VCI3 bezeichnet - hinterlegt. Anhand der Netzzugangsadresse VPI3 ist eine eindeutige Adressierung des ersten Kommunikationsendgerätes KE-A im ATM-basierten Kommunikationsnetz ATM-KN möglich. Für eine Datenübermittlung von der ersten Vermittlungsanlage PBX1 zum zweiten Kommunikationsendgerät KE-B über den zweiten Leitweg LW2 ist in einer, in der ersten Vermittlungsanlage PBX1 hinterlegten Konfigurierungstabelle KT1 die Endgeräteadresse EA-B des zweiten Kommunikationsendgerätes KE-B und eine dieser Endgeräteadresse EA-B zugeordnete Netzzugangsadresse VCI4 hinterlegt. Anhand der Netzzugangsadresse VPI4 ist die eindeutige Adressierung des zweiten Kommunikationsendgerätes KE-B im ATM-basierten Kommunikationsnetz ATM-KN möglich.

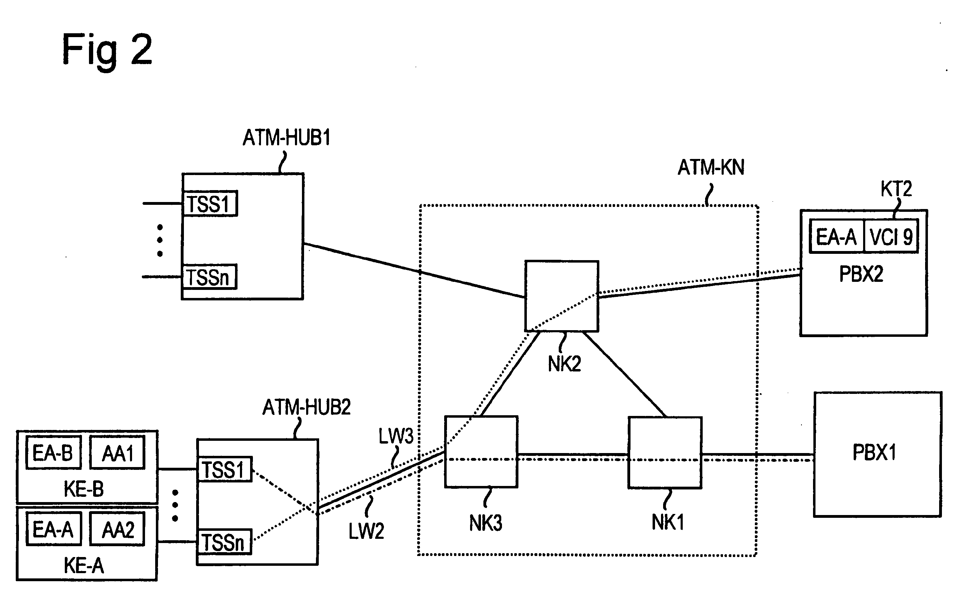

Fig. 2 zeigt eine schematische Darstellung der Zuordnung der Kommunikationsendgeräte KE-A, KE-B nach einem Umzug des ersten Kommunikationsteilnehmers. Aufgrund des Umzugs des ersten Kommunikationsteilnehmers hat sich die Zuordnung des dem ersten Kommunikationsteilnehmer zugeordneten ersten Kommunikationsendgerätes KE-A zu den Teilnehmerschnittstellen TSS1, ...,TSSn der ATM-Übergabeeinheit ATM-HUB1, ATM-HUB2 geändert. So ist das erste Kommunikationsendgerät KE-A nicht mehr über die Teilnehmerschnittstelle TSS1 der ersten ATM-Übergabeeinheit ATM-HUB1 sondern über die Teilnehmerschnittstelle TSSn der zweiten ATM-Übergabeeinheit ATM-HUB2 mit dem ATM-basierten Kommunikationsnetz ATM-KN verbunden.

Soll die dem Kommunikationsteilnehmer bisher zugeordnete Teilnehmerrufnummer auch nach dem Umzug dem Kommunikationsteilnehmer zugeordnet bleiben, ist es notwendig, daß die in der zweiten Vermittlungsanlage PBX2 in der Konfigurationstabelle KT2 hinterlegte Netzzugangsadresse VPI3 für das erste Kommunikationsendgerät KE-A aktualisiert wird, so daß durch die zweite Vermittlungsanlage PBX2 an den ersten Kommunikationsteilnehmer gerichtete Rufe über das ATM-basierte Kommunikationsnetz ATM-KN an die Teilnehmerschnittstelle TSSn der zweiten ATM-Übergabeeinheit ATM-HUB2 weitergeleitet werden.

Hierzu wird beim Anschließen des dem ersten Kommunikationsteilnehmer zugeordneten ersten Kommunikationsendgerätes KE-A an die Teilnehmerschnittstelle TSSn der zweiten ATM-Übergabeeinheit ATM-HUB2 die im ersten Kommunikationsendgerät KE-A gespeicherte Endgeräteadresse EA-A und die Anlagenadressen AA2 vom ersten Kommunikationsendgerät KE-A an die zweite ATM-Übergabeeinheit ATM-HUB2 übermittelt.

In einem nächsten Schritt sendet die zweite ATM-Übergabeeinheit ATM-HUB2 eine die Endgeräteadresse EA-A des ersten Kommunikationsendgerätes KE-A beinhaltende Konfigurationsnachricht über den dritten Leitweg LW3 an die durch die im ersten Kommunikationsendgerät KE-A gespeicherte Anlagenadresse AA2 identifizierte zweite Vermittlungsanlage PBX2 - in der Literatur häufig als 'Home-PBX' des ersten Kommunikationsendgerätes KE-A bezeichnet. Anhand der übermittelten Konfigurationsmeldung, bzw. anhand der auf dem dritten Leitweg LW3 durchlaufenen Netzknoten NK3, NK2 ermittelt die zweite Vermittlungsanlage PBX2 eine neue Netzzugangsadresse VCI9 - also eine ATM-basierte VPI/VCI-Adresse - für das erste Kommunikationsendgerät KE-A und trägt diese an der entsprechenden Stelle in die Konfigurierungstabelle KT2 ein. Somit gilt das erste Kommunikationsendgerät KE-A an der zweiten Vermittlungsanlage PBX2 als neu registriert.

Zusätzlich kann vorgesehen sein, daß die Registrierung des ersten Kommunikationsendgerätes KE-A an der zweiten Vermittlungsanlage PBX2 durch die Übermittlung einer persönlichen Identifikationsnummer PIN (Personal Identification Number) und/oder eines Paßwortes durch den ersten Kommunikationsteilnehmer - in der Literatur häufig als Teilnehmer-Authentifizierung bezeichnet - bestätigt wird.

## Patentansprüche

1. Verfahren zum Ermitteln einer Netzzugangsadresse für eine Nachrichtenübermittlung von einer Vermittlungsanlage (PBX1, PBX2) zu einem über ein Kommunikationsnetz (ATM-KN) mit der Vermittlungsanlage (PBX1, PBX2) verbundenen Kommunikationsendgerät (KE-A, KE-B),
in dem eine, im Kommunikationsnetz (ATM-KN) individuell zugeordnete Endgeräteadresse (EA-A, EA-B) und eine, die dem Kommunikationsendgerät (KE-A, KE-B) zugehörige Vermittlungsanlage (PBX1, PBX2) bezeichnende Anlagenadresse (AA1, AA2) gespeichert sind, und
Teilnehmerschnittstellen (TSS1,...,TSSn) zum Anschluß von Kommunikationsendgeräten (KE-A, KE-B) an das Kommunikationsnetz (ATM-KN) durch mit dem Kommunikationsnetz (ATM-KN) verbundene Übergabeeinheiten (ATM-HUB1, ATM-HUB2) realisiert sind, **dadurch gekennzeichnet daß**
beim Anschließen eines Kommunikationsendgerätes (KE-A, KE-B) an eine Teilnehmerschnittstelle (TSS1,...,TSSn) eine die Endgeräteadresse (EA-A, EA-B) beinhaltende Konfigurierungsnachricht von der betreffenden Übergabeeinheit (ATM-HUB1, ATM-HUB2) an die, anhand der im Kommunikationsendgerät (KE-A, KE-B) gespeicherten Anlagenadresse (AA1, AA2) ermittelte Vermittlungsanlage (PBX1, PBX2) übermittelt wird, von der die Netzzugangsadresse mittels der Konfigurierungsnachricht ermittelt wird.

2. Verfahren nach Anspruch 1,
**gekennzeichnet dadurch,**
**daß** die ermittelte Netzzugangsadresse zusammen mit der Endgeräteadresse (EA-A, EA-B) in der Vermittlungsanlage (PBX1, PBX2) gespeichert wird, und
**daß** das Kommunikationsendgerät (KE-A, KE-B) damit als an der Vermittlungsanlage (PBX1, PBX2) registriert gilt.

3. Verfahren nach Anspruch 2,
**gekennzeichnet dadurch,**
**daß** für eine Registrierung des Kommunikationsendgerätes (KE-A, KE-B) an der Vermittlungsanlage (PBX1, PBX2) zusätzlich eine Identifikationsnummer (PIN) und/oder eines Paßwort vom Kommunikationsendgerät (KE-A, KE-B) an die Vermittlungsanlage (PBX1, PBX2) übermittelt wird.

4. Verfahren nach einem der vorhergehenden Ansprüche,
**gekennzeichnet dadurch,**
**daß** bei einer Änderung der Zuordnung des Kommunikationsendgerätes (KE-A, KE-B) von einer ersten zu einer zweiten Teilnehmerschnittstelle (TSS1, ...,TSSn) durch die beim Anschluß an die zweite Teilnehmerschnittstelle (TSS1, ...,TSSn) übermittelte Konfigurierungsnachricht die in der Vermittlungsanlage (PBX1, PBX2) hinterlegte, dem entsprechenden Kommunikationsendgerät (KE-A, KE-B) zugeordnete Netzzugangsadresse aktualisiert wird.

5. Verfahren nach einem der vorhergehenden Ansprüche,
**gekennzeichnet dadurch,**
**daß** eine Datenübertragung über das Kommunikationsnetz (ATM-KN) auf Basis des ATM-Datenformats (Asynchroner Transfer Modus) erfolgt.

6. Verfahren nach Anspruch 5,
**gekennzeichnet dadurch,**
**daß** die Netzzugangsadresse eine ATM-basierte VPI/VCI-Adresse (Virtuell Path Identifier / Virtuell Channel Identifier) ist.

7. Verfahren nach Anspruch 6,
**gekennzeichnet dadurch,**
**daß** die VPI/VCI-Adresse einen VPI-Wert und einen VCI-Wert umfaßt.

## Claims

1. Method for determining a network access address for transmitting messages from a switching system (PBX1, PBX2) to a communication terminal (KE-A, KE-B) connected to the switching system (PBX1, PBX2) via a communication network (ATM-KN),
in which terminal a terminal address (EA-A, EA-B) individually allocated in the communication network (ATM-KN) and a system address (AA1, AA2) designating the switching system (PBX1, PBX2) associated with the communication terminal (KE-A, KE-B) are stored, and
subscriber interfaces (TSS1, ..., TSSn) are implemented for connecting communication terminals (KE-A, KE-B) to the communication network (ATM-KN) by means of hubs (ATM-HUB1, ATM-HUB2) connected to the communication network (ATM-KN) **characterized in that**
when a communication terminal (KE-A, KE-B) is connected to a subscriber interface (TSS1, ..., TSSn), a configuration message containing the terminal address (EA-A, EA-B) is transmitted from the relevant hub (ATM-HUB1, ATM-HUB2) to the switching system (PBX1, PBX2) determined by reference to the system address (AA1, AA2) stored in the communication terminal (KE-A, KE-B), from which the network access address is determined by means of the configuration message.

2. Method according to claim 1, **characterized in that** the network access address determined is stored, together with the terminal address (EA-A, EAB), in the switching system (PBX1, PBX2) and
**in that** the communication terminal (KE-A, KE-B) is thus considered to be registered at the switching system (PBX1, PBX2).

3. Method according to claim 2, **characterized in that**, for registering the communication terminal (KE-A, KE-B) at the switching system (PBX1, PBX2), an identification number (PIN) and/or a password is additionally transmitted to the switching system (PBX1, PBX2) from the communication terminal (KE-A, KE-B).

4. Method according to one of the preceding claims, **characterized in that**, if the allocation of the communication terminal (KE-A, KE-B) is changed from a first subscriber interface to a second one (TSS1, ..., TSSn), the network access address stored in the switching system (PBX1, PBX2) and allocated to the corresponding communication terminal (KE-A, KE-B) is updated by the configuration message transmitted on connection to the second subscriber interface (TSS1 ..., TSSn).

5. Method according to one of the preceding claims, **characterized in that** data transmission via the communication network (ATM-KN) is effected on the basis of the asynchronous transfer mode (ATM) data format.

6. Method according to claim 5, **characterized in that** the network address is an ATM-based VPI/VCI (virtual path identifier/virtual channel identifier) address.

7. Method according to claim 6, **characterized in that** the VPI/VCI address comprises a VPI value and a VCI value.

## Revendications

1. Procédé pour déterminer une adresse d'accès à un réseau pour une transmission de messages d'un centre de commutation (PBX1, PBX2) vers un terminal de communication (KE-A-, KE-B) relié au centre de commutation (PBX1, PBX2) par le biais d'un réseau de communication (ATM-KN),
dans lequel une adresse de terminal (EA-A, EA-B) attribuée de manière individuelle dans le réseau de communication (ATM-KN) et une adresse de centre (AA1, AA2) désignant le centre de commutation (PBX1, PBX2) associé au terminal de communication (KE-A, KE-B) sont mémorisées et
des interfaces d'abonnés (TSS1, ..., TSSn) pour la connexion de terminaux de communication (KE-A, KE-B) au réseau de communication (ATM-KN) sont réalisées par des unités de transmission (ATM-HUB1, ATM-HUB2) reliées au réseau de communication (ATM-KN), **caractérisé en ce que**,
lors de la connexion d'un terminal de communication (KE-A, KE-B) à une interface d'abonné (TSS1, ..., TSSn), un message de configuration contenant l'adresse de terminal (EA-A, EA-B) est transmise par l'unité de transmission concernée (ATM-HUB1, ATM-HUB2) au centre de commutation (PBX1, PBX2) déterminé grâce à l'adresse de centre (AA1, AA2) mémorisée dans le terminal de communication (KE-A, KE-B), lequel centre détermine l'adresse d'accès au réseau au moyen du message de configuration.

2. Procédé selon la revendication 1, **caractérisé en ce que** l'adresse d'accès au réseau déterminée est mémorisée dans le centre de commutation (PBX1, PBX2) avec l'adresse de terminal (EA-A, EA-B) et
**en ce que** le terminal de communication (KE-A, KE-B) est ainsi considéré comme étant enregistré au niveau du centre de commutation (PBX1, PBX2).

3. Procédé selon la revendication 2, **caractérisé en ce que**, pour un enregistrement du terminal de communication (KE-A, KE-B) au niveau du centre de commutation (PBX1, PBX2), un numéro d'identification (PIN) et/ou un mot de passe est transmis, en plus, du terminal de communication (KE-A, KE-B) au centre de commutation (PBX1, PBX2).

4. Procédé selon l'une des revendications précédentes, **caractérisé en ce que**, lors d'un changement de l'attribution du terminal de communication (KE-A, KE-B) d'une première vers une deuxième interface d'abonné (TSS1, ..., TSSn), l'adresse d'accès au réseau attribuée au terminal de communication correspondant (KE-A, KE-B), déposée dans le centre de commutation (PBX1, PBX2), est actualisée grâce au message de configuration transmis lors de la connexion à la deuxième interface d'abonné (TSS1, ..., TSSn).

5. Procédé selon l'une des revendications précédentes, **caractérisé en ce qu'**une transmission de données par le biais du réseau de communication (ATM-KN) est exécutée sur la base du format de données ATM (*Asynchronous Transfer Mode*).

6. Procédé selon la revendication 5, **caractérisé en ce que** l'adresse d'accès au réseau est une adresse VPI/VCI (*Virtual Path Identifier* / *Virtual Channel Identifier*) basée sur ATM.

7. Procédé selon la revendication 6, **caractérisé en ce que** l'adresse VPI/VCI comprend une valeur VPI et une valeur VCI.
